# EUROPÄISCHE PATENTANMELDUNG

(11) **EP 2 840 069 A1**
(43) Veröffentlichungstag der Anmeldung: **25.02.2015**
(21) Anmeldenummer: 13181513.6
(22) Anmeldetag: 23.08.2013
(51) Int. Cl.: C02F 1/44, C02F 9/00, B01D 61/58

(54) **Verfahren zum Reduzieren des Abwasservolumens einer Rauchgasentschwefelungsanlage**

(71) Anmelder: STEAG Energy Services GmbH, 45128 Essen (DE)
(72) Erfinder: Piedra-Garza, Luis Fernando Dr., 45133 Essen (DE); Lauer, Thomas, 45130 Essen (DE); Beiers, Heinz-Georg Dr., 45239 Essen (DE); Hilger, Magdalena Dr., 5105 Köln (DE); Brüggendick, Hermann Dr., 46514 Schermbeck (DE)
(74) Vertreter: Zenz

(57) **Zusammenfassung**

Die Erfindung betrifft ein Verfahren zum Reduzieren des Abwasservolumens einer Rauchgasentschwefelungsanlage. Aufgrund der erheblichen Abwassermengen sind entsprechend dimensionierte Reinigungsanlagen notwendig, wobei der Bau und der Betrieb dieser Anlagen aufgrund der großen Abwassermengen sehr kostenintensiv sind.

Erfindungsgemäß wird dieses Problem gelöst durch ein Verfahren zum Reduzieren des Abwasservolumens einer Rauschgasentschwefelungsanlage, wobei a) ein Abwasservolumen der Rauchgasentschwefelungsanlage (1) mit einer bestimmten Sulfat-, Quecksilber- und Selenkonzentration bereitgestellt wird, b) das Abwasservolumen (AV) mit einer Hochdruckpumpe (P1) in eine Hochdruck-Trennvorrichtung (1) geführt wird, in der das Abwasservolumen (AV) in ein Permeatvolumen (PV) mit verminderter Sulfat-, Quecksilber- und Selenkonzentration und ein Konzentratvolumen (KV) aufgetrennt wird, c) das Konzentratvolumen (KV) einer Reinigungsvorrichtung (4) zugeführt wird, in welcher die Quecksilber- und Selenkonzentration des Konzentratvolumens reduziert wird.

## Beschreibung

Die vorliegende Erfindung betrifft ein Verfahren zur Abwasservolumenreduktion und insbesondere ein Verfahren zum Reduzieren des Abwasservolumens einer Rauchgasentschwefelungsanlage.

Die bei der Verbrennung von fossilen Brennstoffen entstehenden Rauchgase enthalten eine Vielzahl von Schadstoffen, die vor der Abgabe der Rauchgase an die Umwelt aus diesen zu entfernen sind.

Eine Schadstoffgruppe sind die Schwefeloxide, die aufgrund des in der Kohle vorhandenen Schwefels bei der Verfeuerung entstehen und die üblicherweise mit einer Rauchgasentschwefelungsanlage aus den Rauchgasen entfernt werden. Moderne, fossile Brennstoffe verfeuernde Kraftwerke setzen große Mengen fossiler Brennstoffe um, und somit ist die bei der Verbrennung der fossilen Brennstoffe entstehende Rauchgasmenge erheblich, so dass auch entsprechend dimensionierte Rauchgasentschwefelungsanlagen verwendet werden müssen.

Man unterscheidet generell zwischen regenerativen und nicht-regenerativen Verfahren zur Entschwefelung. Aus Kostengründen haben sich die nicht-regenerativen Verfahren, und insbesondere Nassverfahren, zur Rauchgasentschwefelung durchgesetzt. Bei diesen Nassverfahren wiederum haben sich Verfahren durchgesetzt, die Kalkmilch bzw. eine Kalkmilchsuspension zum Binden der Schwefeloxide verwenden. Dazu werden die Rauchgase in einen Absorberturm geführt, in welchem sie mit einer Kalkmilchsuspension (Ca(OH)₂-Suspension) besprüht werden, wobei die in den Rauchgasen vorhandenen Schwefeloxide in Lösung gehen und mit dem Calciumhydroxid reagieren. Durch Einblasen von Luft wird gegebenenfalls vorhandenes Calciumsulfit (CaSO₃)oxidiert und es entsteht eine Gipssuspension. Aus dieser Suspension wird der Gips abgetrennt und kann als Rohstoff in der Baustoffindustrie verwendet werden.

Das Abwasser einer gemäß dem obigen Verfahren arbeitenden Rauchgasentschwefelungsanlage enthält erhebliche Mengen Sulfat sowie Schadstoffe wie beispielsweise Quecksilber und Selen, die bei der Rauchgasentschwefelung aus den Rauchgasen gelöst werden. Das Abwasser einer Rauchgasentschwefelungsanlage kann somit nicht einfach an die Umwelt abgegeben werden, sondern muss vor einer solchen Abgabe gereinigt werden, wobei insbesondere das Entfernen von Quecksilber und Selen von Bedeutung ist. Aufgrund der erheblichen Abwassermengen sind entsprechend dimensionierte Reinigungsanlagen notwendig, wobei der Bau und der Betrieb dieser Anlagen aufgrund der großen Abwassermengen sehr kostenintensiv sind.

Es ist daher Aufgabe der vorliegenden Erfindung, ein Verfahren zur Reduzierung des Abwasservolumens einer Rauchgasentschwefelungsanlage bereitzustellen.

Erfindungsgemäß wird diese Aufgabe gelöst mit einem Verfahren mit den Merkmalen des Patentanspruchs 1. Bei dem erfindungsgemäßen Verfahren Zur Reduzierung des Abwasservolumens einer Rauchgasentschwefelungsanlage wird ein Abwasservolumen der Rauchgasentschwefelungsanlage mit einer bestimmten Sulfat-, Quecksilber- und Selenkonzentration bereitgestellt. Dieses Abwasservolumen wird mit einer Hochdruckpumpe in eine Hochdruck-Trennvorrichtung geführt, in der das Abwasservolumen in ein Permeatvolumen mit verminderter Sulfat-, Quecksilber- und Selenkonzentration und ein Konzentratvolumen aufgetrennt wird, wobei das Konzentratvolumen im Anschluss einer Reinigungsvorrichtung zugeführt wird, in welcher die Quecksilber- und Selenkonzentration des Konzentratvolumens reduziert wird, wobei gegebenenfalls noch die Konzentration anderer in dem Konzentratvolumen enthaltener Schadstoffe vermindert werden kann.

Zwar sind Hochdruck-Trennvorrichtungen seit Langem bekannt, es wurde aber erst jetzt überraschenderweise festgestellt, dass sich diese zum Abtrennen von Quecksilber- und Selenverbindungen aus Abwässern einer Rauchgasentschwefelungsanlage eignen, i.e. dass eine Abtrennung von Quecksilber und Selen mit einer entsprechenden Trennvorrichtung trotz der erheblichen Sulfat-Konzentration des Abwasservolumens möglich ist. Dies ist insbesondere überraschend, da allgemein bekannt ist, dass Sulfat bei der Abtrennung von Quecksilber und Selen stört und die Sulfat-Konzentration in dem Abwasser einer Rauchgasentschwefelungsanlage üblicherweise im Bereich der Löslichkeitsgrenze liegt.

Leitet man das Abwasservolumen durch die Hochdruck-Trennvorrichtung erhält man ein Permeatvolumen mit verminderter Sulfat-, Quecksilber- und Selenkonzentration und ein Konzentratvolumen mit zumindest erhöhter Selenkonzentration, wobei lediglich das Konzentratvolumen der Reinigungsvorrichtung zugeführt wird, da die Schadstoffkonzentrationen des Permeatvolumens so gering sind, dass dieses in der Regel an die Umwelt abgegeben werden kann.

Da die Sulfat-Konzentration des Abwasservolumens üblicherweise im Bereich der Löslichkeitsgrenze liegt, ist in einem solchen Fall keine erhöhte Sulfat-Konzentration in dem Konzentrat zu beobachten. Es ist davon auszugehen, dass sich Sulfat innerhalb der Trennvorrichtung bei der Auftrennung in das Permeat und das Konzentrat abscheidet, und zum Teil ist sogar eine Verminderung der Sulfat-Konzentration in dem Konzentrat zu beobachten.

Entsprechendes gilt zum Teil für Quecksilber; zwar ist die Quecksilber-Konzentration in dem Permeat erheblich vermindert, in dem Konzentrat aber nicht entsprechend erhöht (und auch ggf. geringer als im Abwasservolumen), so dass auch in Bezug auf Quecksilber davon ausgegangen werden kann, dass sich dieses (zumindest zum Teil) in der Hochdruck-Trennvorrichtung absetzt.

Üblicherweise werden Hochdruck-Trennvorrichtungen in einem 50:50-Verhältnis betrieben, d.h. das Abwasservolumen wird in 50 Vol.-% Permeatvolumen und 50 Vol.-% Konzentratvolumen aufgetrennt. Bei einem gleichbleibenden Rauchgasvolumenstrom und bei Verwendung einer gleichbleibenden Rauchgasentschwefelungsanlage müssen einer Reinigungsvorrichtung erfindungsgemäß lediglich 50 % des üblichen Abwasservolumenstroms zugeführt werden, so dass eine anlagentechnisch erheblich verkleinerte Reinigungsvorrichtung verwendet werden kann, was eine enorme Kostenverminderung bedeutet.

Bei einer bevorzugten Ausführungsform des erfindungsgemäßen Verfahrens wird als Hochdruck-Trennvorrichtung eine Umkehrosmose-Einrichtung mit zumindest einem Umkehrosmose-Modul verwendet. Die Handhabung von Umkehrosmose-Einrichtungen ist seit langem bekannt, so dass die Verwendung einer solchen Einrichtung das Verfahren besonders einfach gestaltet. Die Hochdruck-Trennvorrichtung umfasst zumindest die Umkehrosmose-Einrichtung, die wiederrum zumindest ein Umkehrosmose-Modul, in welchem das Abwasservolumen in ein Permeatvolumen mit verminderter Sulfat-, Quecksilber- und Selenkonzentration und ein Konzentratvolumen aufgetrennt wird, umfasst. In Abhängigkeit von der Größe der Reinigungsvorrichtung und damit der Menge des zu reinigen Abwasservolumens, können auch mehrere Umkehrosmose-Module verwendet werden, wobei diese dann vorzugsweise parallel geschaltet sind, wobei die Module vorzugsweise in Abhängigkeit von der Menge des Abwasservolumens zu- oder abgeschaltet werden können.

Es hat sich überraschenderweise gezeigt, dass die Auftrennung des Abwasservolumens in ein Permeatvolumen mit verminderter Sulfat-, Quecksilber- und Selenkonzentration und ein Konzentratvolumen auch mit einer Nanofiltrations-Einrichtung erreicht werden kann, so dass bei einer alternativen Ausführungsform des erfindungsgemäßen Verfahrens als Hochdruck-Trennvorrichtung eine Nanofiltrations-Einrichtung mit zumindest einem Nanofiltrations-Modul verwendet wird, wobei die Hochdruck-Trennvorrichtung selbstverständlich weitere Bauelemente umfassen kann.

Die Auflagen an die Restkonzentration von Quecksilber und/oder Selen in an die Umwelt abzuführendes Abwasser variieren länderabhängig, und erfahrungsgemäß werden diese Auflagen im Laufe der Zeit immer weiter erhöht. Um eine weitere Verminderung der Quecksilber- und Selenkonzentration in dem Permeatvolumen zu erreichen, ist es bei einer bevorzugten Ausführungsform des erfindungsgemäßen Verfahrens vorgesehen, dass die Trennvorrichtung eine Nanofiltrations-Einrichtung sowie eine Umkehrosmose-Einrichtung umfasst, wobei das Abwasservolumen der Nanofiltrations-Einrichtung zugeführt wird, in der das Abwasservolumen in ein Nano-Permeatvolumen und ein Nano-Konzentratvolumen aufgetrennt wird, das Nano-Permeatvolumen der Umkehrosmose-Einrichtung zugeführt wird, in welcher das Nano-Permeatvolumen in ein Permeatvolumen und ein Konzentratvolumen aufgetrennt wird und schließlich das Nano-Konzentratvolumen und das Konzentratvolumen der Reinigungsvorrichtung zugeführt werden, in welcher die Quecksilber- und Selenkonzentration des Konzentratvolumens reduziert wird.

Bei dieser Ausführungsform wird zwar die Menge des zu reinigenden Abwassers, sprich die Menge des Abwassers, welches der Reinigungsvorrichtung zugeführt wird, gegenüber der Verwendung lediglich einer Umkehrosmose-Einrichtung vergrößert, die Konzentration von Quecksilber und Selen in dem Permeatvolumen, welches die Hochdruck-Trennvorrichtung schließlich verlässt, aber weiter gesenkt, so dass auch strengere Auflagen hinsichtlich der Restkonzentration von Quecksilber und Selen in dem an die Umwelt abgegebenen Abwasser erfüllt werden können.

Bei Verwendung einer Umkehrosmose- und/oder Nanofiltrations-Einrichtung zur Auftrennung des Abwasservolumens in ein schadstoffarmes Permeatvolumen und ein Konzentratvolumen ist es während des Betriebes gelegentlich notwendig, die Membranen des bzw. der Umkehrosmose-Module bzw. das Nanofiltrations-Modul selber zu reinigen bzw. zu spülen, da sich im Zuge der Auftrennung Feststoffe absetzen können. Bei diesem Vorgang wird Wasser, versetzt ggf. mit geeigneten Zusätzen, durch die Membranen bzw. das Modul gespült, um Feststoffe zu lösen und von bzw. aus den Membranen zu spülen.

Um das Verfahren als solches nicht zu unterbrechen, ist es bei einer bevorzugten Ausführungsform des erfindungsgemäßen Verfahrens vorgesehen, dass in der Umkehrosmose- und/oder Nanofiltrations-Einrichtung mehrere parallel geschaltete Linien mit jeweils zumindest einem Umkehrosmose- bzw. Nanofiltrations-Modul bereitgestellt werden, wobei die Linien einzeln zu- oder abgeschaltet werden können. Wird bei der Verfahrensführung festgestellt, dass die Membran(en) des oder der Umkehrosmose-Module oder ein Nanofiltrations-Modul als solches in einer ersten Linie gereinigt werden müssen, so kann diese erste Linie aus dem Verfahren genommen werden und eine zweite Linie zugeschaltet werden, so dass die erste Linie gereinigt werden kann. In Abhängigkeit von der Zeitdauer, die ein Reinigungsvorgang in Anspruch nimmt, kann es sinnvoll sein, nicht nur zwei, sondern drei oder mehr parallel geschaltete Linien bereitzustellen, da so gewährleistet ist, dass die maximale Reinigungskapazität der Trennvorrichtung genutzt wird, indem möglichst viele Module und möglichst viele parallele Linien gleichzeitig betrieben werden.

Die Umkehrosmose- bzw. Nanofiltrations-Module bzw. eine Linie mit zumindest einem Modul können bzw. kann zeitabhängig aus dem Verfahren genommen und gespült bzw. gereinigt werden. Bei einer bevorzugten Ausführungsform ist es jedoch vorgesehen, dass ein Umkehrosmose- oder Nanofiltrations-Modul oder eine Linie mit zumindest einem Umkehrosmose-Modul in Abhängigkeit von vorgegebenen Parametern automatisch gespült bzw. gereinigt werden, so dass nur dann eine Spülung / Reinigung erfolgt, wenn dies unbedingt aufgrund der vorgebenden Parameter notwendig ist.

Zum Spülen bzw. Reinigen des bzw. der Module bzw. der Membranen der Umkehrosmose-Module ist Wasser notwendig, dass eine verminderte Sulfat-, Quecksilber- und Selenkonzentration in Bezug auf das zu trennende und zu reinigende Abwasservolumen aufweist.

Bei einer bevorzugten Ausführungsform des erfindungsgemäßen Verfahrens wird daher zumindest ein Teil des Permeatvolumens und/oder des Nano-Permeatvolumens, die beide gegenüber dem Abwasservolumen eine verminderte Sulfat-, Quecksilber- und Selenkonzentration aufweisen, zwischengespeichert, und ein Umkehrosmose-bzw. Nanofiltrations-Modul oder eine Linie mit zumindest einem Modul wird bzw. werden mit gespeichertem Permeatvolumen gespült. Auf diese Weise wird der Frischwasserverbrauch der Trennvorrichtung bei einem Spül- bzw. Reinigungsvorgang vermindert oder sogar ein Frischwasserverbrauch vollständig vermieden, sofern genügend Permeatvolumen zwischengespeichert wurde.

Das aus der Rauchgasentschwefelungsanlage stammende Abwasservolumen ist regelmäßig nicht mit Feststoffen belastet, da diese (hierbei handelt es sich insbesondere um Gips) vor dem Verlassen der Rausgasentschwefelungsanlage abgetrennt wurden. Es kann jedoch vorkommen, dass aufgrund eines verminderten oder erhöhten Durchsatzes der Rauchgasentschwefelungsanlage geringfügige Feststoffmengen mit dem Abwasservolumen ausgetragen werden. Um zu verhindern, dass diese Feststoffe die Hochdruck-Trennvorrichtung zusetzen, werden bei einer bevorzugten Ausführungsform des erfindungsgemäßen Verfahrens aus dem Abwasservolumen Feststoffe abgetrennt, bevor das Abwasservolumen in ein Permeatvolumen und ein Konzentratvolumen aufgetrennt wird.

Auch wenn das Abwasservolumen vollkommen feststofffrei ist, bilden sich auf der Membran der Umkehrosmose-Module bzw. in den Nanofiltrations-Modulen mit der Zeit Feststoffe. Um die Bildung dieser Feststoffe zu verhindern oder zumindest zu verlangsamen, ist es bei einer bevorzugten Ausführungsform vorgesehen, dass dem Abwasservolumen, bevor es in ein Permeatvolumen und ein Konzentratvolumen aufgetrennt wird, ein Antiscaling-Mittel und/oder eine Säure zugesetzt wird.

Bei dem Betrieb einer Testanlage hat sich bei Analysen der in den Umkehrosmose-Modulen verwendeten Membranen bzw. Nanofilatrations-Module gezeigt, dass sich insbesondere Sulfat-und, überraschenderweise, Eisenverbindungen in bzw. an der Membran bzw. Modulen festsetzen und damit ein Spülen bzw. Reinigen notwendig machen. Um ein solches Festsetzen von Sulfaten und Eisenverbindungen zu verhindern, ist es bei einer Ausführungsform des Verfahrens vorgesehen, dass Sulfate-und/oder Eisenverbindungen aus dem Abwasservolumen abgetrennt werden, bevor dieses in ein Permeatvolumen und ein Konzentratvolumen aufgetrennt wird.

Unabhängig davon, ob als Hochdruck-Trennvorrichtung eine Nanofiltrations-Einrichtung oder eine Umkehrosmose-Einrichtung verwendet wird, ist die Sulfat-, Quecksilber- und Selenkonzentration des Permeatvolumens und/oder des Nano-Permeatvolumens gegenüber dem Abwasservolumen der Rauchgasentschwefelungsanlage vermindert, so dass das Permeatvolumen und/oder das Nano-Permeatvolumen bei einer bevorzugten Ausführungsform zu der Rauchgasentschwefelungsanlage zurückgeführt und dort weiterverwendet werden. Alternativ kann das Permeatvolumen und/oder das Nano-Permeatvolumen bei anderen Abschnitten bzw. Einrichtungen des Verfahrens eingesetzt werden. Eine entsprechende Verfahrensführung hat den Vorteil, dass die Rauchgasentschwefelungsanlage, oder beliebige andere Abschnitte bei der Verfahrensführung, mit weniger Frischwasser betrieben werden können, so dass das Verfahren als solches günstiger durchgeführt werden kann. Alternativ oder zusätzlich kann zumindest ein Teil des die Reinigungsvorrichtung verlassenen Abwassers der Rauchgasentschwefelungsanlage oder einem beliebigen anderen Anlagenteil zugeführt und dort weiterverwendet werden.

In der Reinigungsvorrichtung wird die Quecksilber- und Selenkonzentration des Konzentratvolumens reduziert. Dies kann mit beliebigen, dem Fachmann bekannten Verfahren durchgeführt werden. Bei einer bevorzugten Ausführungsform des Verfahrens ist es jedoch vorgesehen, dass die Quecksilber- und Selenkonzentration des Konzentratvolumens in der Reinigungsvorrichtung reduziert wird, indem BaSO₄ aus dem bereitgestellten Konzentratvolumen ausgefällt wird, wozu eine definierte Menge Ba²⁺-Ionen in das Konzentratvolumen gegeben wird, das entstandene BaSO₄ abgetrennt wird, wobei ein feststoffarmes Konzentratvolumen erhalten wird, das feststoffarme Konzentratvolumen zum Entfernen von Quecksilber über einen Ionenaustauscher geführt wird, wobei ein Konzentratvolumen mit vermindertem Quecksilbergehalt erhalten wird, und Selen und/oder Selenverbindungen aus dem Konzentratvolumen mit vermindertem Quecksilbergehalt entfernt werden.

Mit den oben geschriebenen Verfahrensschritten können Quecksilber und Selen kostengünstig und anlagentechnisch einfach sehr effizient aus dem Konzentratvolumen entfernt werden. Aufgrund der erfindungsgemäßen Abfolge der Verfahrensschritte ergibt sich der Effekt, dass sowohl Quecksilber als auch Selen unter Einhaltung sehr strenger Grenzwerte kostengünstig und ohne hohen anlagentechnischen Aufwand aus einem sulfatbelasteten Abwasser entfernbar sind.

Dazu wird in einer ersten Verfahrensstufe (Sulfatfällungsstufe) die Sulfatkonzentration des Konzentratvolumens durch Ausfällen von Bariumsulfat wesentlich vermindert, wobei erst durch die Verminderung der Sulfatkonzentration die nachfolgende Entfernung von Quecksilber (Quecksilberstufe) und Selen (Selenstufe) überhaupt möglich wird. Bei Verwendung einer der Umkehrosmose-Einrichtung vorgeschalteten Nanofiltrations-Einrichtung (siehe oben) kann die Sulfatfällungsstufe für das Umkehrosmose-Konzentratvolumen entfallen, da bereits bei der Nanofiltration die Sulfatkonzentration so weit gesenkt wird, dass das verbliebene Sulfat (auch in dem Konzentrat der Umkehrosmose-Einrichtung) bei der nachfolgenden Entfernung von Quecksilber und Selen nicht mehr stört.

Zur Ausfällung von Bariumsulfat wird das Konzentratvolumen, dessen Sulfatkonzentration bekannt ist, mit einer definierten Menge Ba²⁺-Ionen (beispielsweise einer Ba²⁺-haltigen Lösung mit bekannter Ba²⁺-Konzentration oder einem Ba²⁺-Ionen aufweisenden wasserlöslichen Feststoff) versetzt, so dass BaSO₄, das ein sehr geringes Löslichkeitsprodukt von 1,08 * 10⁻¹⁰ mol²/l² hat, aus der Lösung ausfällt. Da sowohl die Konzentration des Sulfats als auch die Konzentration/Menge der Ba²⁺-haltigen Lösung bzw. des Feststoffs bekannt sind, kann diese Verfahrensstufe derart durchgeführt werden, dass genau stöchiometrische Mengen Barium dem Konzentratvolumen zugeführt werden. Ist die Sulfatkonzentration nicht bekannt oder schwankt stark, so wird diese vor der Sulfatfällung bestimmt.

Wie bereits erwähnt, wird nach dem Abtrennen des Quecksilbers über einen Ionenaustauscher Selen und/oder Selenverbindungen aus dem Konzentratvolumen mit vermindertem Quecksilbergehalt entfernt. Bei einer bevorzugten Ausführungsform des erfindungsgemäßen Verfahrens wird dies erreicht, indem ein Eisengemisch mit Fe(0) sowie Fe(II)- und Fe(III)-Verbindungen zu dem Konzentratvolumen mit vermindertem Quecksilbergehalt gegeben wird, wobei vorzugsweise pulverförmiges Fe(0) zugegeben wird, im Anschluss daran ein pH-Wert zwischen 6 und 8,5, vorzugsweise zwischen 7,0 und 8,0, eingestellt wird, und Selen bzw. selenhaltige Feststoffe abgetrennt werden.

Selen ist in dem Konzentratvolumen überwiegend in der Oxidationsstufe (VI) bzw. als Selenation (SeO₄²⁻) vorhanden. Es wird davon ausgegangen, dass Selenat mit dem Eisen bzw. Eisengemisch reagiert, und zwar vermutlich unter Bildung von unter anderem Fe^{II}₄Fe^{III}₂(OH)₁₂SeO_{4·}nH₂O, das als Feststoff ausfällt. Ob und wenn welche weiteren selenhaltigen Feststoffe bzw. Feststoffgemische entstehen ist noch nicht genau geklärt, für die Erfindung als solche jedoch auch unwesentlich.

Insbesondere bei der Bearbeitung großer Abwassermengen ist es wünschenswert, die Ausfällung und Abtrennung der verschiedenen Feststoffe zügig durchzuführen.

Überraschenderweise wurde festgestellt, dass die Ausfällung von Selen bzw. selenhaltiger Feststoffe besonders rasch stattfindet, wenn ein Eisengemisch umfassend Eisen(0)- sowie Eisen(II)- und Eisen(III)-Verbindungen zu der Lösung gegeben wird, wobei das Fe(0) vorzugsweise in Pulverform vorliegt. Das Mischungsverhältnis von Fe(0), Fe(II) und Fe(III) hängt von der jeweiligen Selenkonzentration im Abwasser ab.

Auf diese Weise findet die Abscheidung von Selen bzw. selenhaltigen Feststoffen in einen Zeitraum statt, der gegenüber bekannten Verfahren überraschend gering ist und somit eine deutlich günstigere Verfahrensführung ermöglicht.

Mit der zuvor beschriebenen Verfahrensstufe zur Abtrennung von Selen aus dem Abwasser können Konzentration von < 15 µg Selen pro Liter Abwasser erreicht werden.

Die Erfindung betrifft ferner die Verwendung einer Umkehrosmose-Einrichtung oder einer Nanofiltrations-Einrichtung zum Auftrennen eines Abwasservolumens einer Rauchgasentschwefelungsanlage in ein Permeatvolumen mit verminderter Sulfat-, Quecksilber- und Selenkonzentration und ein Konzentratvolumen mit erhöhter Sulfat-, Quecksilber- und Selenkonzentration.

Im nachfolgenden werden bevorzugte Ausführungsformen unter Bezugnahme auf die Zeichnung beschrieben, wobei
Figur 1 eine erste Ausführungsform des erfindungsgemäßen Verfahrens veranschaulicht,
Figur 2 eine zweite Ausführungsform des erfindungsgemäßen Verfahrens veranschaulicht,
Figur 3 eine dritte Ausführungsform des erfindungsgemäßen Verfahrens veranschaulicht, und
Figur 4 die Entfernung von Sulfat, Quecksilber und Selen aus einem Konzentratvolumen detailliert veranschaulicht.

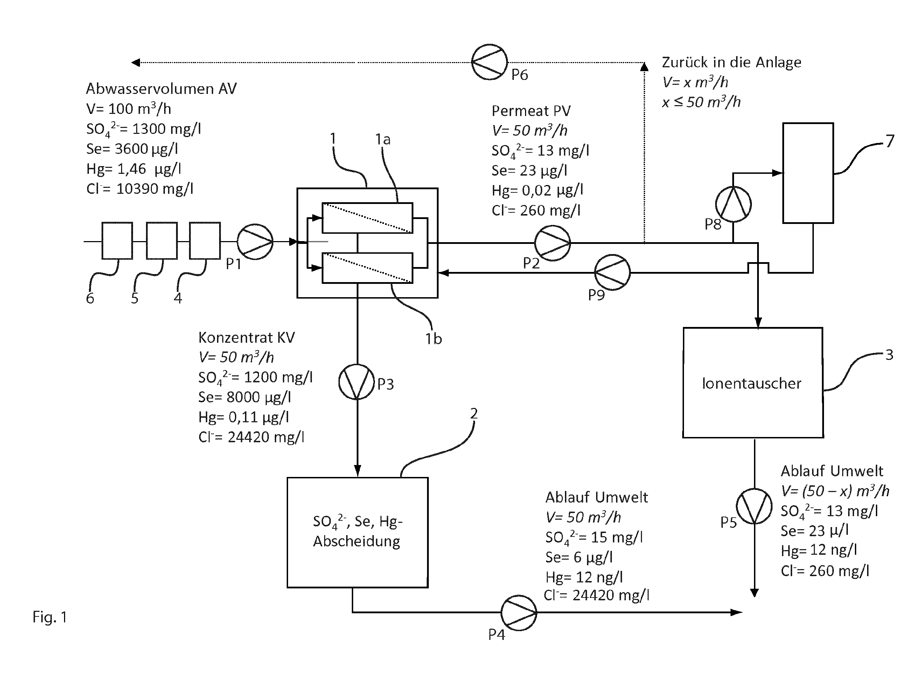

Figur 1 zeigt eine bevorzugte Ausführungsform des erfindungsgemäßen Verfahrens. Bei dieser Ausführungsform ist eine Umkehrosmose-Einrichtung Teil einer Hochdruck-Trennvorrichtung 1. Die Umkehrosmose-Einrichtung umfasst bei der gezeigten Ausführungsform zwei parallel geschaltete Linien mit jeweils einem Umkehrosmose-Modul 1a, 1b, wobei die einzelnen Linien einzeln zu- oder abgeschaltet werden können. Der Hochdruck-Trenneinrichtung 1 wird über eine Hochdruckpumpe P1 ein Abwasservolumen AV bereitgestellt, wobei bei der hier beschriebenen Ausführungsform ein Abwasservolumen von 100 m³/h bereitgestellt wird. Dieses Abwasservolumen stammt von einer Rauchgasentschwefelungsanlage und enthält nach Verlassen dieser Anlage (für die Beschreibung dieser Ausführungsform) 1.300 mg/l Sulfat, 3.600 µg/l Selen, 1,46 µg/l Quecksilber sowie 10390 mg/l Chlorid (siehe dazu Tabelle 1).

Nach dem Verlassen der Rauchgasentschwefelungsanlage wird das Abwasservolumen durch eine Vorrichtung 6 zum Abtrennen von Feststoffen geführt, welche das Abwasservolumen ggf. nach Verlassen der Rauchgasentschwefelungsanlage mitführt. Üblicherweise ist das die Rauchgasentschwefelungsanlage verlassende Abwasservolumen AV weitgehend feststofffrei, so dass die Vorrichtung 6 zum Entfernen von Feststoffen nur optional und bei erhöhtem Feststoffgehalt des Abwasservolumens zugeschaltet wird.

Im Anschluss an die Vorrichtung 6 zum Entfernen von Feststoffen wird das Abwasservolumen in einer weiteren Vorrichtung 5 mit einem Antiscaling-Mittel und/oder einer Säure versetzt, um eine Abscheidung von Feststoffen auf den Membranen der Umkehrosmose-Module zu vermeiden oder zumindest zu verlangsamen. Ob ein Antiscaling-Mittel und/oder eine Säure zugegeben wird, hängt von der genauen Zusammensetzung des Abwasservolumens ab, d. h. eine Zugabe der vorgenannten Mittel ist nicht zwingend erforderlich. Schließlich wird in einer Vorrichtung 4 ggf. Sulfat und/oder Eisenverbindungen aus dem Abwasservolumen abgetrennt, da sich gezeigt hat, dass sich Sulfate und Eisenverbindungen bevorzugt auf den Membranen der Umkehrosmose-Module absetzen. Ob eine Sulfat- und/oder Eisenverbindungsabtrennung erfolgt, hängt wiederum von der genauen Zusammensetzung des Abwasservolumens ab. Die vorgenannten Vorrichtungen 6 - 4 können in beliebiger Reihenfolge angeordnet oder gar in einer einzigen Vorrichtung zusammengefasst sein.

Das Abwasservolumen wird durch die beiden parallel geschalteten Linien mit jeweils einem Umkehrosmose-Modul geführt, wobei bei der gezeigten Ausführungsform diese Umkehrosmose-Module so eingestellt sind, dass 50 % des zugeführten Abwasservolumens als Permeatvolumen PV und 50 % als Konzentratvolumen KV erhalten werden. Die beiden parallelen Linien können zeitgleich arbeiten, es kann jedoch auch in Abhängigkeit von verschiedenen Parametern nur eine Linie aktiv arbeiten und die andere beispielsweise zu Reinigungszwecken abgeschaltet sein, so dass das gesamte Abwasservolumen durch eine Linie aufgetrennt wird. Die Anzahl der verwendeten Linien hängt dabei zum einen von dem Abwasservolumen selber als auch von der Häufigkeit der Notwendigkeit einer Reinigung der einzelnen Umkehrosmose-Module ab, d. h. wenn aufgrund der Zusammensetzung des Abwasservolumens eine häufige Reinigung der Umkehrosmose-Module notwendig ist, kann es angezeigt sein, eine größere Anzahl von parallel geschalteten Linien zu verwenden.

In der Hochdruck-Trennvorrichtung 1 wird das über die Hochdruckpumpe P1 zugeführte Abwasservolumen in ein Permeatvolumen PV und ein Konzentratvolumen KV aufgeteilt. In dem Permeatvolumen PV beträgt die Sulfatkonzentration 13 mg/l, die Selenkonzentration 23 µg/l, die Quecksilberkonzentration 0,02 µg/l und die Chloridkonzentration 260 mg/l, d.h. bei sämtlichen der vorgenannten Verbindungen ist eine erhebliche Verringerung der Konzentration gegenüber der Konzentration in dem Abwasservolumen AV zu beobachten (Tabelle 1).

Auch in dem Konzentratvolumen KV ist eine Verminderung der Sulfatkonzentration auf 1200 mg/l zu beobachten, was wahrscheinlich darauf zurückzuführen ist, dass sich ein Teil des Sulfates an den Membranen der Umkehrosmose-Module abgesetzt hat. Die Selenkonzentration ist auf 8000 µg/l annähert verdoppelt, was mit der erheblichen Verminderung in dem Permeatvolumen und einer Trennleistung von 50% übereinstimmt. Die Quecksilberkonzentration in dem Konzentratvolumen ist ebenfalls vermindert, und zwar auf 0,11 µg/l, wobei davon ausgegangen wird, dass sich ebenfalls ein Teil der Quecksilberverbindungen an den Membranen der Umkehrosmose-Module niedergeschlagen hat. Die Konzentration von Chlorid in dem Konzentratvolumen beträgt 24420 mg/l und ist somit ebenfalls ansatzweise doppelt so hoch wie in dem Abwasservolumen.

Die Konzentrationen von Selen und Quecksilber in dem Permeatvolumen sind nun so gering, dass das Permeatvolumen (in Abhängigkeit von länderspezifischen Vorgaben) bereits ohne weitere Reinigung an die Umwelt abgegeben werden kann. Sofern der Grenzwert hinsichtlich der Quecksilberkonzentration noch überschritten ist, kann das Permeatvolumen noch mittels einer Pumpe P2 einem Ionentauscher zugeführt werden, in welchem die Konzentration von Quecksilber noch einmal stark reduziert wird, und zwar auf 12 ng/l. Das so weiter aufgereinigte Permeatvolumen kann dann über eine Pumpe P5 ohne eine weitere Reinigung an die Umwelt abgegeben werden.

Aufgrund der Tatsache, dass Sulfat, Selen, Quecksilber sowie Chlorid in dem Permeatvolumen mit gegenüber dem Abwasservolumen stark verringerten Konzentrationen vorliegen, kann das Permeatvolumen, oder zumindest ein Teil des Permeatvolumens, zurück in die Rauchgasentschwefelungsanlage oder eine der Rauchgasentschwefelungsanlage vorgeschaltete Anlage geführt werden und dort wieder in den Arbeitsprozess eingeführt werden, wodurch sich erhebliche Kosten für ansonsten notwendiges Frischwasser einsparen lassen. Aufgrund der vorgenannten erheblichen Reduzierung der Schadstoffe in dem Permeatvolumen ist ein Aufkonzentrieren dieser Schadstoffe durch Rückführung zumindest eines Teils des Permeatvolumens ausgeschlossen.

Bei der gezeigten Ausführungsform ist es ferner möglich, einen Teil des Permeatvolumens über eine Pumpe P8 einem Tank 7 zuzuführen. Sobald eine Reinigung eines der Umkehrosmose-Module notwendig ist, kann das in dem Tank zwischengespeicherte Permeatvolumen zur Spülung einer Membran über eine Pumpe P9 der Hochdruck-Trennvorrichtung zugeführt werden.

Das Konzentratvolumen KV wird mittels einer Pumpe P3 einer Vorrichtung 2 zum Abscheiden von Sulfat, Selen und Quecksilber zugeführt. Die Abscheidung der vorgenannten Verbindungen kann durch dem Fachmann bekannte Verfahren erfolgen.

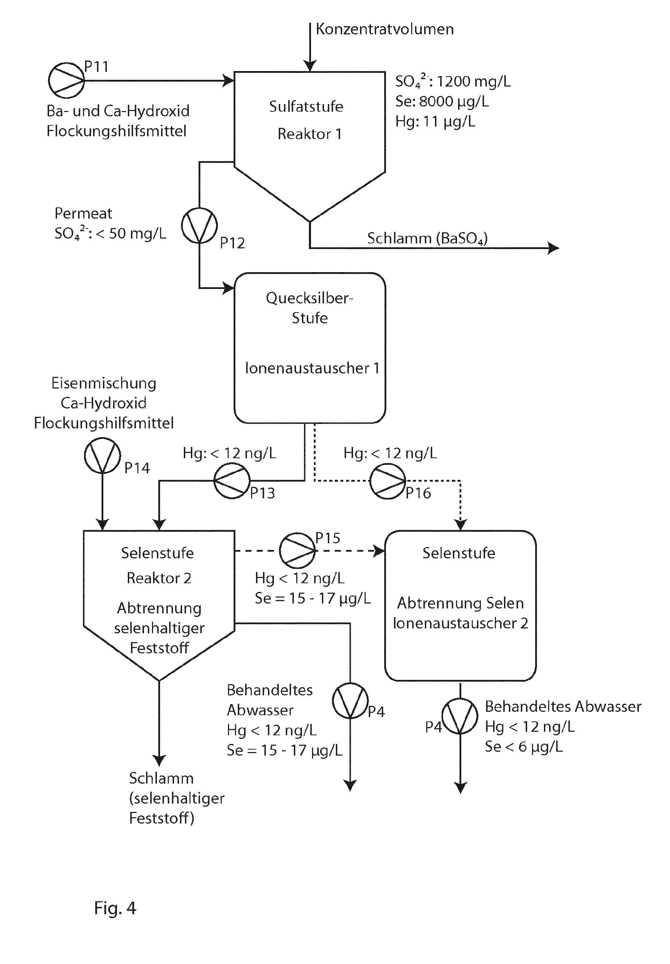

Eine besonders effiziente Entfernung von Sulfat, Quecksilber sowie Selen aus dem Abwasservolumen wird nachfolgend detailliert unter Bezugnahme auf Figur 4 beschrieben.

### Abtrennen Sulfat, Selen und Quecksilber

Mit Hilfe einer Pumpe P11 werden dem Konzentratvolumen Ba-und Ca-Hydroxid sowie ein Flockungshilfsmittel zugeführt. Der entstehende Feststoff, der primär Bariumsulfat enthält, in Abhängigkeit von der Menge des zugeführten Fällungsmittels aber auch Bariumselenat und andere Feststoffe enthalten kann, wird abgetrennt und in Abhängigkeit von dessen Reinheit weiterverwertet oder entsorgt.

Das sulfatarme Konzentratvolumen wird über eine Pumpe P12 einer Quecksilberstufe mit einem Ionenaustauscher 1 zugeführt, mittels welchem das Quecksilber bis zu einer Konzentration von < 12 ng/l aus dem Abwasser abgetrennt wird, so dass ein Konzentratvolumen mit vermindertem Quecksilbergehalt entsteht. In dem Ionentauscher können die üblichen, zur Quecksilberabtrennung eingesetzten Harze verwendet werden.

Das Konzentratvolumen mit dem verminderten Quecksilbergehalt kann über eine Pumpe P13 einem Reaktor 2 der Selenfällungsstufe zur Abtrennung von Selen und selenhaltigen Feststoffen zugeführt werden. In Reaktor 2 wird das zugeführte Konzentratvolumen zum Ausfällen von selenhaltigen Verbindungen unter Rühren über eine Pumpe P14 mit einer Eisenmischung, Ca-Hydroxid und einem Flockungshilfsmittel versetzt (zu den genauen Angaben siehe unten). Nach einer vorgegebenen Reaktionszeit werden die entstehenden Feststoffe abgetrennt, das Konzentratvolumen hat dann (in Abhängigkeit von den genauen Reaktionsbedingungen) eine Quecksilberrestkonzentration von < 12 ng/L und eine Selenrestkonzentration von ca. 15 µg/L.

Sofern die Restkonzentrationen den vorgegebenen Grenzwerten entsprechen, kann das Konzentratvolumen mittels einer Pumpe P4 (siehe Figur 1) an die Umwelt abgegeben werden.

Soll die Selenrestkonzentration weiter gesenkt werden, kann das Konzentratvolumen alternativ über Pumpe P15 einer Selenabtrennung mit einem Ionenaustauscher 2 zugeführt werden. In Ionenaustauscher 2 wird die Selenrestkonzentration auf < 6 µg/l vermindert. Der Ablauf von Ionenaustauscher 2 kann dann entweder an die Umwelt abgegeben werden.

Das Konzentratvolumen mit dem verminderten Quecksilbergehalt kann alternativ, wenn beispielsweise die Selenbelastung nur relativ gering ist, direkt (und ohne "Umweg" über die Selenabscheidung durch Ausfällen von selenhaltigen Verbindungen) über Pumpe P16 dem Ionenaustauscher 2 zugeführt werden. Der Ablauf von Ionenaustauscher 2 kann auch in diesem Fall entweder an die Umwelt abgegeben werden.

Sofern der Ablauf von Ionenaustauscher 2 oder Reaktor 2 der Selenfällungsstufe noch zu stark mit Barium belastet ist, weil beispielsweise in der Sulfatfällungsstufe eine überstöchiometrische Menge Fällungsmittel verwendet wurde, kann dem Teil des Ablauf des Ionenaustauschers 13 oder des Reaktors 12, der der Umwelt zugeführt werden soll, wieder Sulfat zugegeben werden, um Reste von Barium als Bariumsulfat auszufällen, welches in Abhängigkeit von dessen Menge vor Abführung abgetrennt werden kann. Bei dem rückzuführenden Teil des Ablaufs von Ionenaustauscher 2 oder Reaktor 2 ist eine Abtrennung von Barium nicht unbedingt erforderlich, kann aber wie oben angegeben erfolgen.

Im nachfolgenden wird die Selenabscheidung als ein wesentliches Element der Reinigung des Konzentratvolumens detailliert beschrieben.

### Selenascheidung durch Ausfällung

In der Selenfällungsstufe werden Selen bzw. selenhaltige Verbindungen abgetrennt. Um ein optimales Trennergebnis zu gewinnen, wurden für die Selenfällungsstufe viele Laborversuche durchgeführt, deren Ergebnisse in der unten dargestellten Tabelle 2 wiedergegeben sind. Im Folgenden wird auf die einzelnen Versuche bzw. Versuchsreihen eingegangen, und zwar insbesondere im Hinblick auf die Auswirkungen der Änderung verschiedener Prozessparameter, wobei ggf. abweichende Ausgangskonzentrationen verwendet wurden.

Eine Mischung von metallischem pulverförmigen Eisen (≤ 99% Reinheitsgrad), FeCl₂·4H₂O (≥ 99%) sowie FeCl₃·6H₂O (≥ 98%) ("Eisenmischung" in Tabelle 2) wurde in verschiedenen Mengenverhältnissen und Mengen einer Probe eines Konzentratvolumens mit vermindertem Quecksilbergehalt (aus der Quecksilberstufe) zugesetzt. Proben wurden jede Stunde gezogen und eine Bestimmung von Selen nach DIN EN ISO 17294-2 (ICP-MS) durchgeführt.

Wie Tabelle 2 zu entnehmen ist, spielte der Einfluss der Reaktionszeit eine untergeordnete Rolle (Versuche 14 - 23), die Selenrestkonzentration schwankte bei Reaktionszeiten von 1 bis 3 bzw. 4 Stunden nur geringfügig.

Der Einfluss des pH-Wertes war jedoch überraschend groß, es wurden relativ große Schwankungen bei der Selenkonzentration zwischen pH-Werten von 7 bis 11 festgestellt.

Der pH-Wert des Konzentratvolumens mit vermindertem Quecksilbergehalt betrug ca. 6,5. Nach Zugabe der jeweiligen Eisenmischung sank der pH-Wert bis ca. 3 - 4, und es wurde eine 20 Gew%-Suspension Ca(OH)₂ zur Justierung des pH-Wertes zugegeben.

Eine Erhöhung des pH-Wertes auf ca. 11 führte nicht zu niedrigen Selenrestkonzentrationen. Es wurde festgestellt, dass im fast neutralen bis leicht basischen Milieu (pH-Werte zwischen 7,4 und 8,0; Versuche 18 - 23) die größte Selenabscheidung zu erzielen war (Restkonzentration Selen 15 µg/l).

Das Mengenverhältnis Fe/Fe(II)/Fe(III) 1:10:10 (Versuche 18 - 23) erwies sich als optimal. Wie ein Vergleich der Versuche 18 - 20 und 21 - 23 zeigt, bewirkt eine erhöhte Zugabe an Eisenmischung keine weitere Absenkung der Selenrestkonzentration.

Die in Tabelle 2 gezeigten Versuchsergebnisse beziehen sich alle auf Eisenmischungen mit Eisenchlorid-Verbindungen, da mit diesen Verbindungen die besten Ergebnisse bei der Selenabscheidung erzielt wurden.

### Langsame Zugabe Eisenmischung (Versuche 18 - 20)

### (Beste bekannte Ausführung für Selenstufe per Abscheidung)

Dem Konzentratvolumen mit vermindertem Quecksilbergehalt (Ablauf der Quecksilberstufe) wurde langsam (und in Abhängigkeit vom Volumen, beispielsweise über eine Zeitdauer von 5 Minuten) 100 ml einer Suspension der Eisenmischung in Wasser (siehe Versuche 18 - 20) zugegeben, wobei sich ein pH-Wert von ca. 3,0 - 3,5 einstellt. Im Anschluss an die Zugabe wurde eine 20-Gew%-Calciumhydroxid-Suspension zugegeben, bis sich ein pH-Wert von ca. 8 einstellte. Gleichzeitig wurde eine angepasste Menge Polyacrylamid als Flockungshilfsmittel zugegeben. Die Suspension wurde dann 3 Stunden gerührt und der Feststoff abgetrennt. Nach jeder vollen Stunde wurde eine Probe zur Bestimmung des Selengehalts gezogen.

Das Abwasser der Selenabscheidung mittels Abtrennung von Feststoffen kann entweder der Selenabscheidung mit Ionenaustaucher zugeführt werden oder an die Umwelt abgegeben werden.

### Prozessparameter:

Lösung mit vermindertem Quecksilbergehalt (aus Hg-Stufe)
V = 11, T = 25 °C, p = 1 atm., pH-Wert = 6,0 - 7,0.

### Reaktionszeit:

60 Min.
Chemikalien
- 100 mL (20 mL/Min.) einer eisenhaltigen Lösung^{[1]} wird zu 1 L Lösung aus der Hg-Stufe zugegeben (pH-Wert nach Zugabe: 3,0 - 3,5)
- Ca(OH)₂ (> 95% ACS, CAS 1305-620) 20%-Gew. Suspension bis zum pH-Wert 7,5 - 8,0; zusammen mit 1 mL Polyacrylamid (50%-Gew. wässrige Lösung, CAS 9003-05-8) zugegeben
- [1] 1 g Fe (99%, Pulver, CAS 7439-89-6), 10 g FeCl₂•4H₂O (≥ 99%, CAS 13478-10-9) sowie 10 g FeCl₃•6H₂O (≥ 99%, CAS 10025-77-1) in 500 mL Deionat.

Tabelle 3 zeigt Versuchsergebnisse von Vergleichsversuchen. Die Abscheidung von Selen wurde einmal mit einer bekannten Eisenmischung (Versuche 1 - 3), aufweisend Fe(0) und Fe(II), und mit der bei dem erfindungsgemäßen Verfahren eingesetzten Eisenmischung, umfassend Fe(0) sowie Fe(II) und Fe(III), untersucht, und zwar bei verschiedenen Parametern.

Überraschenderweise hat die Verwendung der erfindungsgemäßen Eisenmischung eine ganz erhebliche, unerwartete Auswirkung auf die Selenabscheidung.

Bezogen auf pH-Wert 8, bei welchem die Selenabscheidung bei beiden Versuchsreihen am größten war, bewirkt die erfindungsgemäße Eisenmischung in der bevorzugten Zusammensetzung bei einer Reaktionszeit von einer Stunde eine Steigerung der Selenabscheidung um den Faktor 10. Wie Tabelle 3 zu entnehmen ist, tritt der Effekt der verbesserten Selenabscheidung auch bei anderen Zusammensetzungen der Eisenmischung auf, nicht jedoch in einem Maße, wie es bei der bevorzugten Eisenmischung der Fall ist.

Bei Verwendung der erfindungsgemäßen Eisenmischung kann die Selenabscheidung also wesentlich schneller und damit kostengünstiger durchgeführt werden.

### Selenabtrennung mit Ionenaustauscher

Mit der vorgenannten Methode der Selenabscheidung über die Abtrennung von Feststoffen können Restkonzentrationen von < 15 µg/l erreicht werden. Sind die einzuhaltenden Grenzwerte geringer, ist die oben genannte Vorgehensweise nicht ausreichend.

Alternativ (oder additiv nach der Selenabscheidung über Abtrennung von Feststoffen), kann Selen mit einem Ionenaustauscher abgetrennt werden. Als Zulauf für den Ionenaustauscher dient entweder der Ablauf der Quecksilber-Stufe oder das Abwasser der oben beschriebenen Selenabscheidung über die Abtrennung von Feststoffen

Um eine Selenkonzentrationen in der behandelten Lösung < 6 µg/L zu erhalten, wurde das Ionenaustauscherharz DOWEX Marathon A2 eingesetzt. Laut Herstellerangaben ist dieses Harz in der Lage, Anionen aus Abwässern mit hohem Gehalt an Chlorid-Ionen zu entfernen, was insbesondere dann von Vorteil ist, wenn Selen vorher bereits mit Hilfe der Eisenmischung abgetrennt wurde. Das Harz besitzt Dimethylethanolamin als funktionelle Gruppe, das der Fraktion der stark basischen Ionenaustauscherharze zugeordnet ist.

Ähnlich wie bei der Quecksilber-Stufe wurde eine 1,5 L Kolonne mit 0,5 L Ionenaustauscherharz DOWEX Marathon A2 gefüllt. Die Durchflussgeschwindigkeit betrug 1 l/h. Proben wurden aus einem Sammelbehälter in regulären Abständen gezogen und gemischt. Die Mischprobe wurde anschließend zu einem Analytischen Labor geschickt. Die Selenrestkonzentration der Mischprobe betrug < 5 µg/L. Genauere Angaben konnten wegen der Bestimmungsgrenze von 5 µg/L für Selen mittels ICP-MS nicht betroffen werden.

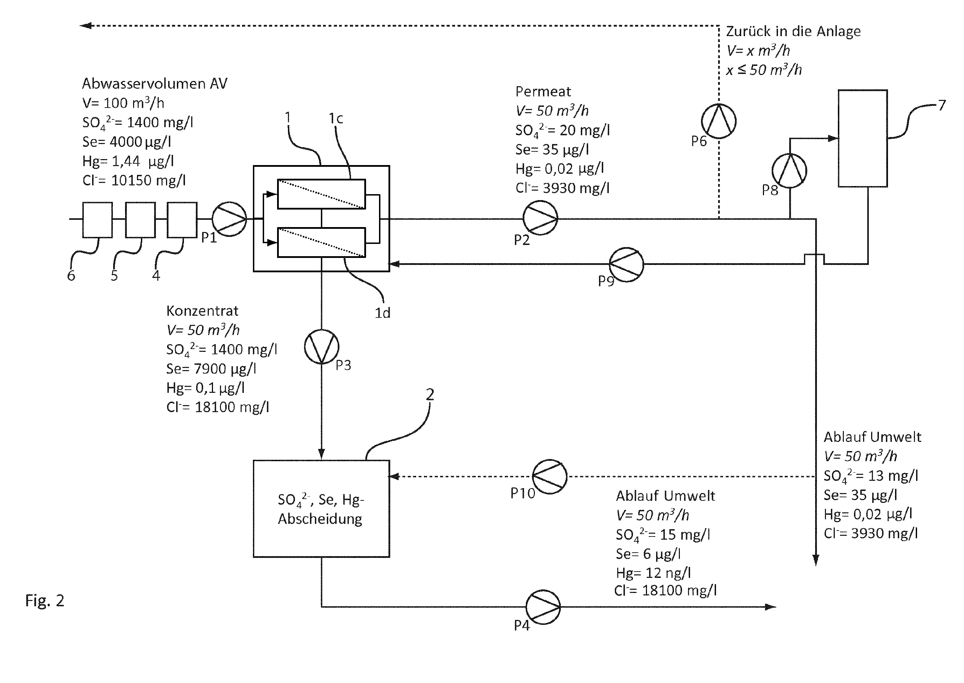

Figur 2 zeigt eine zweite bevorzugte Ausführungsform des erfindungsgemäßen Verfahrens. Bei dieser Ausführungsform ist eine Nanofiltrations-Einrichtung Teil einer Hochdruck-Trennvorrichtung 1, wobei die Nanofiltrations-Einrichtung zwei parallel geschaltete Nanofiltrations-Module 1c, 1d umfasst.

Hinsichtlich der Konzentrationen von Sulfat, Quecksilber, Selen und Chlorid in dem Abwasservolumen, dem Permeatvolumen sowie dem Konzentratvolumen wird auf Tabelle 1 verwiesen. Diese belegen, dass auch bei der Verwendung einer Nanofiltrations-Einrichtung gewährleistet ist, dass das die Hochdruck-Trennvorrichtung verlassende Permeatvolumen PV erheblich verminderte Konzentrationen der vorgenannten Stoffe aufweist. Das eigentliche Verfahren entspricht im Wesentlichen dem zu Figur 1 beschriebenen, wobei bei dieser Ausführungsform auf eine weitere Reinigung des Permeatvolumens mittels eines Ionentauschers verzichtet wird. Die weitere Reinigung des Permeatvolumens kann jedoch nur dann fortgelassen werden, wenn die Quecksilber- und/oder Selenkonzentration unter einem länderspezifischen Grenzwert liegt; ist dies nicht der, muss eine zusätzliche Reinigung erfolgen, wobei dies, wie zu Figur 1 beschrieben, beispielsweise mit einem Ionentauscher (für Quecksilber) oder einem beliebigen anderen Verfahren geschehen kann.

Alternativ kann das Permeat mittels einer Pumpe P10 beispielsweise der Vorrichtung 2 zugeführt werden, wobei in einem solchen Fall die Sulfatfällung umgangen werden kann, da die Sulfatkonzentration des Permeatvolumens bereits ausgereicht gering ist. Zur Vermeidung unnötiger Wiederholungen wird auf eine detaillierte Beschreibung der zweiten Ausführungsform verzichtet.

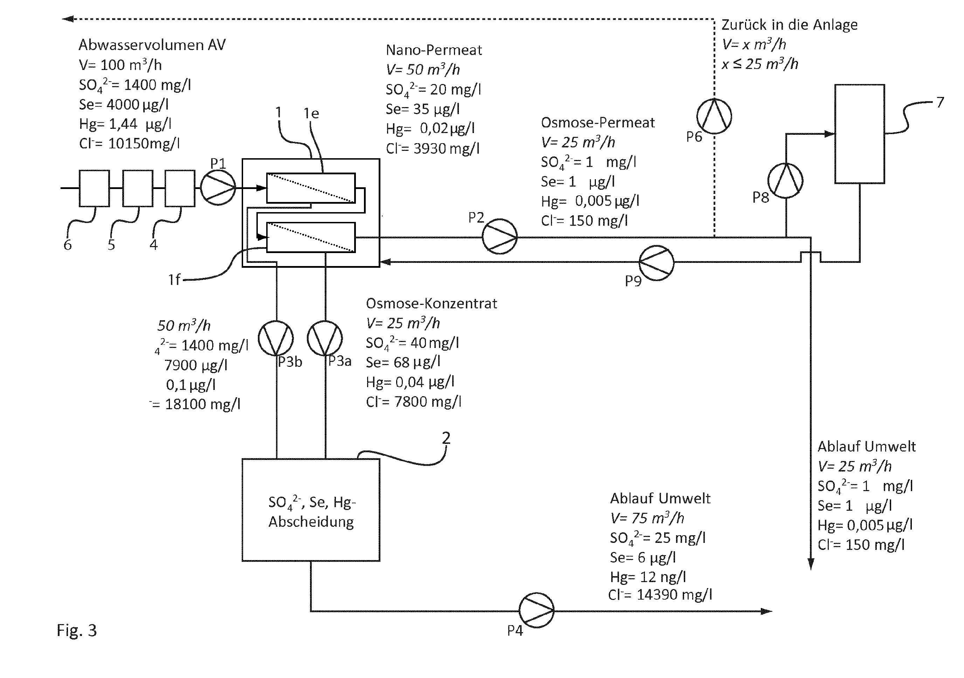

Figur 3 veranschaulicht eine dritte bevorzugte Ausführungsform des erfindungsgemäßen Verfahrens. Bei dieser Ausführungsform umfasst die Hochdruck-Trennvorrichtung 1 eine Nanofiltrations-Einrichtung 1e sowie eine Umkehrosmose-Einrichtung 1f. Im Hinblick auf die Konzentrationen von Sulfat, Quecksilber, Selen und Chlorid in dem Abwasservolumen, den Permeaten und den Konzentraten wird wiederrum auf Tabelle 1 verwiesen.

Das Abwasservolumen AV mit den in Figur 3 gezeigten Konzentrationen von Sulfat, Selen, Quecksilber und Chlorid wird über eine Hochdruckpumpe P1 der Hochdruck-Trennvorrichtung zugeführt, und zwar der Nanofiltrations-Einrichtung 1e der Hochdruck-Trennvorrichtung 1. Die Nanofiltrations-Einrichtung 1e kann mehrere parallel geschaltete (in Figur 3 nicht dargestellte) Nanofiltrations-Module umfassen, die sich ggf. separat zu- bzw. abschalten lassen. Die Nanofiltrations-Einrichtung 1e trennt das Abwasser in ein Nano-Permeatvolumen und ein Nano-Konzentratvolumen auf, wobei bei der gezeigten Ausführungsform mit einem Trennungsverhältnis von 50/50 % gearbeitet wird. Das Nano-Konzentratvolumen wird über eine Pumpe P3b einer Vorrichtung 2 zum Abscheiden von Sulfat, Selen und Quecksilber zugeführt.

Das Nano-Permeatvolumen mit verminderter Sulfat-, Selen-, Quecksilber- und Chloridkonzentration wird als Zulauf der Umkehrosmose-Einrichtung 1f zugeführt, die das Nanofiltrations-Konzentrat in ein Konzentratvolumen und ein Permeatvolumen auftrennt, wobei bei der gezeigten Ausführungsform auch die Umkehrosmose-Einrichtung 1f mit einer Trennungsverhältnis von 50/50 % arbeitet. Das Konzentratvolumen der Umkehrosmose-Einrichtung 1f wird über eine Pumpe P3a der Vorrichtung zum Abscheiden von Sulfat, Selen und Quecksilber zugeführt, wobei aufgrund der Tatsache, dass bereits in der der Umkehrosmose-Einrichtung 1f vorgeschalteten Nanofiltrations-Einrichtung 1e die Sulfatkonzentrat stark vermindert wurde, die Sulfatabscheidung in der Vorrichtung 2 umgangen werden kann. Die mit Hilfe der Vorrichtung 2 gereinigten kombinierten Konzentrate werden über eine Pumpe P4 der Umwelt zugeführt.

Das Permeatvolumen der Umkehrosmose-Einrichtung 1f kann mittels einer Pumpe P2 der Umwelt zugeführt werden. Alternativ kann das Permeatvolumen ganz oder teilweise in die Rauchgasentschwefelungsanlage oder eine vorgeschaltete Anlage zurückgeführt werden oder in einem Tank 7 zwischengelagert werden, aus welchem es zu Reinigungszwecken über eine Pumpe P8 bei Bedarf der Hochdruck-Trennvorrichtung 1 zugeführt werden kann.

Zwar wird bei dieser Ausführungsform zwar das zu reinigende Abwasservolumen der Rauchgasentschwefelungsanlage nur um lediglich 25% reduziert (bei einer Trennleistung von 50% bei der Nanofiltrations- und Umkehrosmose-Einrichtung), jedoch sind die Konzentrationen von Selen und Quecksilber in dem die Hochdruck-Trennvorrichtung verlassenden (Umkehrosmose)Permeat gegenüber denen der Permeate aus der ersten und zweiten Ausführungsform noch einmal deutlich vermindert, so dass auf diese Weise ggf. strengere Grenzwerte erfüllt werden können, ohne das eine aufwendige und kostspielige weitere Reinigung notwendig ist.

Alternativ können in der Hochdruck-Trennvorrichtung auch mehrere Umkehrosmose- und Nanofiltrations-Einrichtungen in Reihe geschaltet sein um eine verbesserte Reinigungswirkung zu erzielen. Oftmals ist jedoch eine "Mischung" aus einer Umkehrosmose- und einer Nanofiltrations-Einrichtung vorzuziehen, da so gezielter bestimmte Schadstoffe abgetrennt werden können.

Welche Ausführungsform des erfindungsgemäßen Verfahrens die jeweils beste ist hängt insbesondere von der Belastung des Abwasservolumens ab.

**Tabelle 1: Stoffkonzentrationen im Abwasservolumen, Permeat(en), Konzentrat(en)**

| Hochdruck-Trennvorrichtung mit Umkehrosmose-Einrichtung | | | | |
|---|---|---|---|---|
| | Sulfat (mg/L) | Selen (µg/L) | Quecksilber (µg/L) | Chlorid (mg/L) |
| Abwasservolumen | 1300 | 3600 | 1,46 | 10390 |
| Konzentrat | 1200 | 8000 | 0,11 | 24420 |
| Permeat | 13 | 23 | 0,02 | 260 |
| | | | | |

| Hochdruck-Trennvorrichtung mit Nanofiltrations-Einrichtung | | | | |
|---|---|---|---|---|
| | Sulfat (mg/L) | Se (µg/L) | Quecksilber (µg/L) | Chlorid (mg/L) |
| Abwasservolumen | 1400 | 4000 | 1,44 | 10150 |
| Konzentrat | 1400 | 7900 | 0,10 | 18100 |
| Permeat | 20 | 35 | 0,02 | 3930 |
| | | | | |

| Hochdruck-Trennvorrichtung mit Nanofiltrations-Einrichtung und Umkehrosmose-Einrichtung | | | | |
|---|---|---|---|---|
| | Sulfat (mg/L) | Se (µg/L) | Quecksilber (µg/L) | Chlorid (mg/L) |
| Abwasservolumen | 1400 | 4000 | 1,44 | 10150 |
| Nano-Konzentrat | 1400 | 7900 | 0,10 | 18100 |
| Nano-Permeat (Zulauf Umkehrosmose) | 20 | 35 | 0,02 | 3930 |
| Osmose-Konzentrat | 40 | 68 | 0,04 | 7800 |
| Osmose-Permeat | 1 | 1 | 0,005 | 150 |

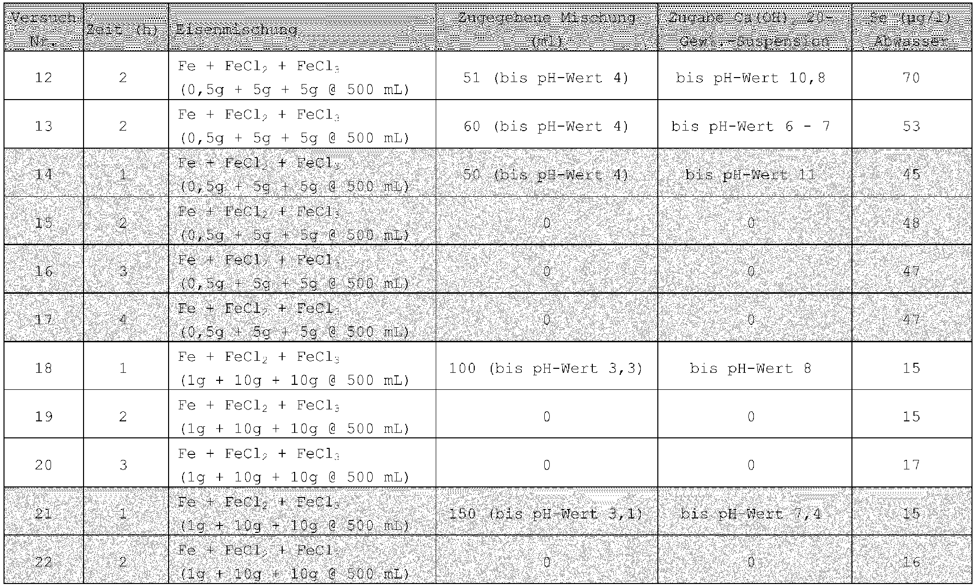

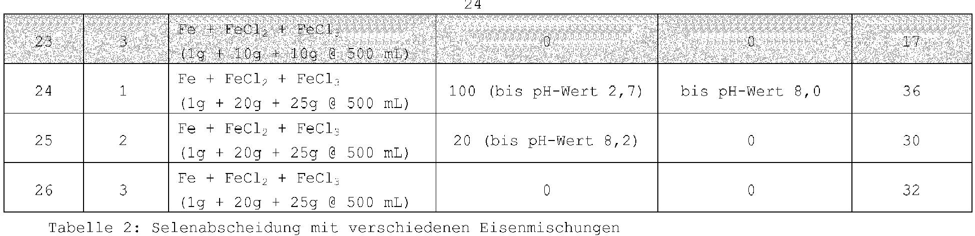

**Tabelle 3: Vergleichsversuche zur Selenabscheidung**

| Versuch Nr. | Eisenmischung | justierter pH-Wert | Se (µg/l) vor Abscheidung | Se (µg/l) nach Abscheidung | %-Abscheidung |
|---|---|---|---|---|---|
| 1 | Fe (0) + FeCl₂ (1:10) | 6,0 | 380 | 330 | 13,16 |
| 1 | Fe (0) + FeCl₂ (1:10) | 7,0 | 270 | 220 | 18,52 |
| 1 | Fe (0) + FeCl₂ (1:10) | 8,0 | 323 | 184 | 43,03 |
| 1 | Fe (0) + FeCl₂ + FeCl₃ (1:10:10) | 6,0 | 323 | 95,4 | 70,46 |
| 1 | Fe (0) + FeCl₂ + FeCl₃ (1:10:10) | 7,0 | 323 | 104 | 67,80 |
| 1 | Fe (0) + FeCl₂ + FeCl₃ (1:10:10) | 8,0 | 331 | 14,5 | 95,62 |

## Patentansprüche

1. Verfahren zum Reduzieren des Abwasservolumens einer Rauschgasentschwefelungsanlage, wobei
a) ein Abwasservolumen der Rauchgasentschwefelungsanlage (1) mit einer bestimmten Sulfat-, Quecksilber- und Selenkonzentration bereitgestellt wird,
b) das Abwasservolumen (AV) mit einer Hochdruckpumpe (P1) in eine Hochdruck-Trennvorrichtung (1) geführt wird, in der das Abwasservolumen (AV) in ein Permeatvolumen (PV) mit verminderter Sulfat-, Quecksilber- und Selenkonzentration und ein Konzentratvolumen (KV) aufgetrennt wird,
c) das Konzentratvolumen (KV) einer Reinigungsvorrichtung (4) zugeführt wird, in welcher die Quecksilber- und Selenkonzentration des Konzentratvolumens reduziert wird.

2. Verfahren zum Reduzieren des Abwasservolumens einer Rauschgasentschwefelungsanlage nach Anspruch 1, **dadurch gekennzeichnet, dass** als Hochdruck-Trennvorrichtung (1) eine Umkehrosmose-Einrichtung mit zumindest einem Umkehrosmose-Modul (1a, 1b) verwendet wird.

3. Verfahren zum Reduzieren des Abwasservolumens einer Rauschgasentschwefelungsanlage nach Anspruch 1, **dadurch gekennzeichnet, dass** als Hochdruck-Trennvorrichtung (1) eine Nanofiltrations-Einrichtung mit zumindest einem Nanofiltrations-Modul (1c, 1d) verwendet wird.

4. Verfahren zum Reduzieren des Abwasservolumens einer Rauschgasentschwefelungsanlage nach Anspruch 2 oder 3, **dadurch gekennzeichnet, dass** als Trennvorrichtung (1) eine Nanofiltrations-Einrichtung und eine Umkehrosmose-Einrichtung verwendet werden, wobei
b1) das Abwasservolumen (AV) der Nanofiltrations-Einrichtung zugeführt wird, in der das Abwasservolumen (AV) in ein Nano-Permeatvolumen (NPV) und ein Nano-Konzentratvolumen (NKV) aufgetrennt wird,
b2) das Nano-Permeatvolumen (NPV) der Umkehrosmose-Einrichtung zugeführt wird, in der das Nano-Permeatvolumen (NPV) in ein Permeatvolumen (PV) und ein Konzentratvolumen (KV) aufgetrennt wird, und
wobei das Nano-Konzentratvolumen (NKV) und das Konzentratvolumen (KV) der Reinigungsvorrichtung (2) zugeführt werden.

5. Verfahren zum Reduzieren des Abwasservolumens einer Rauschgasentschwefelungsanlage nach einem der Ansprüche 2 - 4, **dadurch kennzeichnet, dass** in der Umkehrosmose-Einrichtung bzw. der Nanofiltrations-Einrichtung mehrere parallel geschaltete Linien mit jeweils zumindest einem Umkehrosmose-oder Nanofiltrations-Modul (1a, 1b, 1c, 1d) bereitgestellt werden, wobei die Linien einzeln zu- oder abgeschaltet werden können.

6. Verfahren zum Reduzieren des Abwasservolumens einer Rauschgasentschwefelungsanlage nach einem der Ansprüche 2 - 5, **dadurch gekennzeichnet, dass** ein Umkehrosmose- oder Nanofiltrations-Modul (1a, 1b, 1c, 1d) oder eine Linie in Abhängigkeit von vorgegebenen Parametern automatisch gespült wird.

7. Verfahren zum Reduzieren des Abwasservolumens einer Rauschgasentschwefelungsanlage nach Anspruch 6, **dadurch gekennzeichnet, dass** zumindest ein Teil des Permeatvolumens (PV) und/oder des Nano-Permeatvolumens (NPV) zwischengespeichert wird und dass ein Modul (1a, 1b, 1c, 1d) oder eine Linie mit zumindest einem Umkehrosmose- oder Nanofiltrations-Modul mit gespeichertem Permeatvolumen gespült wird.

8. Verfahren zum Reduzieren des Abwasservolumens einer Rauschgasentschwefelungsanlage nach einem der Ansprüche 2 - 7, **dadurch gekennzeichnet, dass** aus dem Abwasservolumen (AV) Feststoffe abgetrennt werden, bevor das Abwasservolumen in ein Permeatvolumen (PV) und ein Konzentratvolumen (KV) aufgetrennt wird.

9. Verfahren zum Reduzieren des Abwasservolumens einer Rauschgasentschwefelungsanlage nach einem der Ansprüche 2 - 8, **dadurch gekennzeichnet, dass** dem Abwasservolumen, bevor es in ein Permeatvolumen (PV) und ein Konzentratvolumen (KV) aufgetrennt wird, ein Antiscaling-Mittel und/oder eine Säure zugesetzt wird.

10. Verfahren zum Reduzieren des Abwasservolumens einer Rauschgasentschwefelungsanlage nach einem der Ansprüche 2 - 9, **dadurch gekennzeichnet, dass** Sulfate und/oder Eisenverbindungen aus dem Abwasservolumen abgetrennt werden, bevor das Abwasservolumen (AV) in ein Permeatvolumen (PV) und ein Konzentratvolumen (KV) aufgetrennt wird.

11. Verfahren zum Reduzieren des Abwasservolumens einer Rauschgasentschwefelungsanlage nach einem der Ansprüche 1 - 10, **dadurch gekennzeichnet, dass** das zumindest ein Teil des Permeatvolumens (PV) und/oder des Nano-Permeatvolumens zu der Rauchgasentschwefelungsanlage zurückgeführt und dort weiterverwendet wird.

12. Verfahren zum Reduzieren des Abwasservolumens einer Rauschgasentschwefelungsanlage nach einem der Ansprüche 1 - 11, **dadurch gekennzeichnet, dass** zumindest ein Teil des die Reinigungsvorrichtung (4) verlassenden Abwassers zu der Rauchgasentschwefelungsanlage zurückgeführt und dort weiterverwendet wird.

13. Verfahren zum Reduzieren des Abwasservolumens einer Rauschgasentschwefelungsanlage nach einem der Ansprüche 1 - 11, **dadurch gekennzeichnet, dass** in der Reinigungsvorrichtung (4) die Quecksilber- und Selenkonzentration des Konzentratvolumens reduziert wird, indem
c1) BaSO₄ aus dem bereitgestellten Konzentratvolumen ausgefällt wird, wozu eine definierte Menge Ba²⁺-Ionen in das Konzentratvolumen gegeben wird,
c2) das entstandene BaSO₄ abgetrennt wird, wobei ein feststoffarmes Konzentratvolumen erhalten wird,
c3) das feststoffarme Konzentratvolumen zum Entfernen von Quecksilber über einen Ionenaustauscher geführt wird, wobei ein Konzentratvolumen mit vermindertem Quecksilbergehalt erhalten wird, und
c4) Selen und/oder Selenverbindungen aus dem Konzentratvolumen mit vermindertem Quecksilbergehalt entfernt werden.

14. Verfahren zum Reduzieren des Abwasservolumens einer Rauchgasentschwefelungsanlage nach Anspruch 13, **dadurch gekennzeichnet, dass** in Schritt c4) das Selen und/oder Selenverbindungen entfernt werden, indem
• ein Eisengemisch mit Fe(0) sowie Fe(II)- und Fe(III)-Verbindungen zu dem Konzentratvolumen mit vermindertem Quecksilbergehalt gegeben werden, wobei vorzugsweise pulverförmiges Fe(0) zugegeben wird,
• im Anschluss daran ein pH-Wert zwischen 6 und 8,5, vorzugsweise zwischen 7,0 und 8,0, eingestellt wird, und
• Selen bzw. selenhaltige Feststoffe abgetrennt werden.

15. Verwendung einer Umkehrosmose-Einrichtung oder einer Nanofiltrations-Einrichtung zum Auftrennen eines Abwasservolumens (AV) einer Rauchgasentschwefelungsanlage in ein Permeatvolumen (PV) mit verminderter Sulfat-, Quecksilber-und Selenkonzentration und ein Konzentratvolumen (KV) mit erhöhter Sulfat-, Quecksilber- und Selenkonzentration.
